(19)

**Europäisches Patentamt**
**European Patent Office**
**Office européen des brevets**

(11) **EP 3 762 682 B1**

(12) # EUROPÄISCHE PATENTSCHRIFT

(45) Veröffentlichungstag und Bekanntmachung des Hinweises auf die Patenterteilung:
**20.12.2023 Patentblatt 2023/51**

(21) Anmeldenummer: **19709005.3**

(22) Anmeldetag: **01.03.2019**

(51) Internationale Patentklassifikation (IPC):
**G01B 11/06** *(2006.01)*    **G01B 9/02** *(2022.01)*
**G01N 21/86** *(2006.01)*    **G01N 21/89** *(2006.01)*

(52) Gemeinsame Patentklassifikation (CPC):
**G01B 11/0675; G01B 9/02025; G01B 9/02027; G01B 11/0691;** G01B 2210/40; G01N 21/86; G01N 21/8901

(86) Internationale Anmeldenummer:
**PCT/EP2019/055151**

(87) Internationale Veröffentlichungsnummer:
**WO 2019/170540 (12.09.2019 Gazette 2019/37)**

(54) **DICKENMESSVORRICHTUNG ZUR MESSUNG EINER DICKE FLACHER WERKSTÜCKE UND ZUGEHÖRIGES VERFAHREN**

THICKNESS-MEASURING DEVICE FOR MEASURING A THICKNESS OF FLAT WORKPIECES AND ASSOCIATED METHOD

DISPOSITIF DE MESURE DE L'ÉPAISSEUR POUR MESURER UNE ÉPAISSEUR DE PIÈCES PLANES ET PROCÉDÉ ASSOCIÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.03.2018 DE 102018105011**

(43) Veröffentlichungstag der Anmeldung:
**13.01.2021 Patentblatt 2021/02**

(73) Patentinhaber: **Bundesrepublik Deutschland, vertreten durch das Bundesministerium für Wirtschaft und Energie, 38116 Braunschweig (DE)**

(72) Erfinder:
• **POLLINGER, Florian 38106 Braunschweig (DE)**
• **PRELLINGER, Günter 38106 Braunschweig (DE)**

(74) Vertreter: **Gramm, Lins & Partner Patent- und Rechtsanwälte PartGmbB Frankfurter Straße 3 C 38122 Braunschweig (DE)**

(56) Entgegenhaltungen:
DE-A1- 10 060 144    DE-A1-102007 022 580
DE-B4-102013 017 289    DE-T5-112010 000 705
JP-A- H04 364 410    JP-A- 2001 033 215
JP-B2- 3 293 666

• KARL MEINERS-HAGEN ET AL: "Profilometry with a multi-wavelength diode laser interferometer; Profilometry with a multi-wavelength diode laser interferometer", MEASUREMENT SCIENCE AND TECHNOLOGY, IOP, BRISTOL, GB, Bd. 15, Nr. 4, 19. April 2004 (2004-04-19) , Seiten 741-746, XP020066495, ISSN: 0957-0233, DOI: 10.1088/0957-0233/15/4/018 in der Anmeldung erwähnt

**EP 3 762 682 B1**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Dickenmessvorrichtung gemäß Anspruch 1. Gemäß einem zweiten Aspekt betriff die Erfindung ein Verfahren zum Messen einer Dicke flacher Werkstücke gemäß Anspruch 11.

Die Bestimmung der Dicke beispielsweise von Metallfolien ist insbesondere bei der Messung von dünnen Folien, die beispielsweise für die Herstellung von Kondensatoren oder Akkumulatoren verwendet werden, mit besonders hoher Messgenauigkeit erforderlich.

Aus der DE 10 2013 017 289 B4 ist ein Verfahren bekannt, mit dem die interferometrische Dicke von Folien bestimmt werden kann. Es werden darin die Differenzen mehrerer interferometrischer Abstandsmessungen gebildet. Es hat sich jedoch herausgestellt, dass insbesondere bei Einsatz einer derartigen Vorrichtung in einem Walzwerk höchste Genauigkeiten nur schwer zu erreichen sind und die Messung der absoluten Dicke einer externen Referenz darf.

Aus der DE 44 36 922 A1 ist es bekannt, bei einer Anordnung mit drei Interferometerstrahlengängen eine effektive Phasendifferenz zweier Phasenmesswerte zur Längenmessung auszuwerten. Die dort beschriebene Messanordnung unter Verwendung eines verkörperten Längennormals ist für Anforderungen einer Dickenmessung allerdings ungeeignet.

In der JP 2001 033 215 A ist ein Verfahren beschrieben, bei dem mittels Heterodyn-Interferometern die Dicken-Ungleichheit von Wafern bestimmt wird. Mittels des dort beschriebenen Verfahrens ist eine Messung der absoluten Dicke nicht möglich.

Die JP 3293666 B2 beschreibt ein Verfahren zu Bestimmung der absoluten Dicke anhand einer Referenzlänge. Ein solches Verfahren ist empfindlich gegenüber Schwankungen der Referenzlänge, beispielsweise auf Basis von Temperatur, Luftdruck oder Luftfeuchtigkeitsänderungen.

Aus der DE 100 60144 A1 ist ein Verfahren bekannt, bei dem die Dicke flacher Werkstücke anhand von Kalibriereinrichtungen, insbesondere anhand von Kalibrierplatten, bestimmt wird. Ein solches Verfahren ist vergleichsweise aufwändig und ist in seiner erreichbaren Messunsicherheit deutlich eingeschränkt.

Aus der DE 10 2007 022 580 A1 ist ein Verfahren zur Dickenmessung einer Holzwerkstoffplatte bekannt, bei dem zwei Sensoren eingesetzt werden. Es wird ein Abstandswert eines ersten Lasersensors zu einem Normal bestimmt und ein zusätzlicher zweiter Lasersensor außerhalb des Bereichs der Förderstrecke Holzwerkstoffplatte verwendet, um aus dem Abstandswert des zweiten Sensors zu dem Normal den Abstandswert des ersten Sensors zu dem Normal abzuleiten.

Der Artikel "Profilometry with a multi-Wavelength diode laser interferometer" von Meiners-Hagen et al, Meas. Sci. Technol. 15 (2004) 741-746, befasst sich mit der Profilometrie von Oberflächen mittels Multi-Wellenlängen-Interferometrie. Eine derartige Vorrichtung kann keine Dicken messen.

In der DE 2016 100 745 B3 wird ein solcher Abstandssensor basierend auf Mehrwellenlängeninterferometrie mit einem Triangulationssensor kombiniert, um das interferentielle Messgerät zu erhalten.

Eine weitere Formbestimmungsvorrichtung ist aus der DE 11 2010 000 705 T5 bekannt.

In der JP H04 364 410 A ist ein Verfahren zur Dickenmessung beschrieben, bei dem nicht-interferometrische Laser-Abstandsmesser eingesetzt werden. Sehr geringe Messunsicherheiten lassen sich mit einem solchen Verfahren nicht erreichen.

Der Erfindung liegt die Aufgabe zugrunde, die Messunsicherheit bei der Messung der Dicke flacher Werkstücke zu vermindern.

Die Erfindung löst das Problem durch eine Dickenvorrichtung mit den Merkmalen von Anspruch 1.

Gemäß einem zweiten Aspekt löst die Erfindung das Problem durch ein Verfahren mit den Merkmalen von Anspruch 11.

Vorteilhaft an der Erfindung ist, dass die Dicke als absoluter Dickenmesswert erhaltbar ist. Damit werden Kalibriermessungen in der Regel entbehrlich.

Ein weiterer Vorteil ist es, dass der so erhaltene Messwert für die Dicke vergleichsweise unempfindlich auf Schwankungen des Brechungsindex reagiert. Es hat sich herausgestellt, dass Brechungsindex-Schwankungen eine wichtige Quelle von Messunsicherheit sein können. Das gilt insbesondere dann, wenn - wie gemäß einer bevorzugten Ausführungsform vorgesehen - die Dickenmessvorrichtung in einem Walzwerk zwischen zwei Verarbeitungsvorrichtungen zum Bearbeiten, insbesondre Umformen, der Metallfolie angeordnet ist. In diesem Fall kann es zu vergleichsweise starken Schwankungen der Temperatur und/oder der Zusammensetzung der umgebenen Luft kommen. Zwar ist es möglich und gemäß einer bevorzugten Ausführungsform vorgesehen, dass Luft mit einer konstanten Temperatur in den Zwischenraum an der Stelle eingedüst wird, an der die Lichtstrahlen auf das Werkstück treffen. Selbst dann kann es aber, beispielsweise durch Verwirbelungen, zu lokalen Schwankungen des Brechungsindex kommen. Das erhöht die Messunsicherheit, was unerwünscht ist. Dadurch, dass die Dicke aus der effektiven Phase bestimmt wird, können solche Schwankungen des Brechwerts zumindest teilweise kompensiert werden.

Vorteilhaft ist zudem, dass auch kleinere thermische Ausdehnungen und sonstige mechanische Veränderungen der Dickenmessvorrichtung zumindest teilweise kompensierbar sind. Das führt zu einer erhöhten Robustheit der Dickenmessvorrichtung.

Im Rahmen der vorliegenden Beschreibung wird unter einem Werkstück insbesondere ein reflektierendes Werkstück verstanden, sodass die Rücklichtstrahlen entstehen können. Günstig ist es, wenn das flache Werkstück eine Dicke von höchstens 150 $\mu$m, vorzugsweise höchstens 60 $\mu$m hat. Bei dem Werkstück kann es sich insbesondere um eine Metallfolie handeln. Es ist aber auch möglich, dass es sich bei dem Werkstück um eine Polymerfolie, insbesondere eine beschichtete Polymerfolie, handelt.

Unter dem Merkmal, dass die erste Phase zwischen dem ersten Lichtstrahl und dem vom Werkstück reflektierten ersten Rücklichtstrahl erfasst wird, wird insbesondere verstanden, dass eine Veränderung des Gangunterschieds zwischen einem ersten Referenz-Lichtstrahl, der aus dem gleichen Quell-Lichtstrahl erhalten wird wie der erste Lichtstrahl, und dem ersten Rücklichtstrahl gemessen wird. Die Veränderung des Gangunterschieds ist die Phasenveränderung relativ zu einer Phase, die ohne Werkstück gemessen wird.

Das Merkmal des Erfassens der ersten Phase zwischen dem ersten Lichtstrahl und einem vom Werkstück reflektierten ersten Rücklichtstrahl ist daher äquivalent zum Merkmal des Erfassens der ersten Phase zwischen einem ersten Referenz-Lichtstrahl und einem vom Werkstück reflektierten ersten Rücklichtstrahl, wobei der erste Referenz-Lichtstrahl eine konstante Phasendifferenz zu dem ersten Lichtstrahl hat.

Entsprechend wird unter dem Merkmal, dass die zweite Phase zwischen dem zweiten Lichtstrahl und dem vom Werkstück reflektierten ersten Rücklichtstrahl erfasst wird, insbesondere verstanden, dass eine Veränderung des Gangunterschieds zwischen einem zweiten Referenz-Lichtstrahl, der aus dem gleichen Quell-Lichtstrahl erhalten wird wie der zweite Lichtstrahl, und dem zweiten Rücklichtstrahl gemessen wird.

Das Merkmal des Erfassens der zweiten Phase zwischen dem zweiten Lichtstrahl und dem vom Werkstück reflektierten zweiten Rücklichtstrahl ist daher äquivalent zum Merkmal des Erfassens der zweiten Phase zwischen einem zweiten Referenz-Lichtstrahl und einem vom Werkstück reflektierten zweiten Rücklichtstrahl, wobei der zweiten Referenz-Lichtstrahl eine konstante Phasendifferenz zu dem zweiten Lichtstrahl hat.

Gemäß einer bevorzugten Ausführungsform besitzen das erste Interferometer und das zweite Interferometer eine Lichtquelle, die ausgebildet ist zum Abgeben von Licht einer ersten Wellenlänge und von Licht zumindest einer zweiten Wellenlänge, wobei für die Wellenlänge gilt, dass eine erste synthetische Wellenlänge zwischen 1 und 50 $\mu$m beträgt. Vorzugsweise beträgt die erste synthetische Wellenlänge höchstens 20 $\mu$m.

Besonders günstig ist es, wenn die Lichtquelle ausgebildet ist zum Abgeben von Licht einer dritten Wellenlänge, die so gewählt ist, dass eine zweite synthetische Wellenlänge, die größer ist als die erste synthetische Wellenlänge, höchstens 200 $\mu$m, vorzugsweise höchsten 100 $\mu$m, beträgt. Das hat den Vorteil, dass bei hinreichend genauer Kenntnis des Intervalls, in dem das Messergebnis liegen muss, eine absolute Messung möglich ist.

Es ist vorteilhaft, wenn das erste Interferometer und das zweite Interferometer die gleiche eigene Lichtquelle haben. Besonders günstig ist es, wenn sich die Interferometer gemeinsam genau eine Lichtquelle haben.

Günstig ist es, wenn die Dickenmessvorrichtung einen Absolut-Dickenmesser zum Bestimmen eines Grob-Dickenmesswerts der absoluten Dicke des Werkstücks aufweist, wobei die Auswerteeinheit eingerichtet ist zum automatischen Bestimmen der Dicke des Werkstücks aus dem Grob-Dickenmesser und der effektiven Phase. Bei dem Grob-Dickenmesser kann es sich beispielsweise um einen Triangulationssensor und/oder einen Absorptionsmesser handeln. Interferometrische Messsysteme messen grundsätzlich nur innerhalb eines Wellenzugs genau. Ist der Wellenzug dadurch hinreichend bestimmt, dass Vorinformationen über die Dicke existieren, kann die absolute Dicke berechnet werden. Wie das genau erfolgt, ist weiter unten beschrieben.

Besonders günstig ist es jedoch, wenn kein Absolut-Dickenmesser vorhanden und/oder verwendet wird. Das ist dann möglich, wenn die größte verwendete synthetische Wellenlänge doppelt so groß ist wie die Dicke des Werkstücks und/oder einer Dickenschwankungen des Werkstücks.

Vorzugsweise besitzt die Dickenmessvorrichtung eine thermische Isolation der Arme und einen die Arme verbindenden Traverse. Eine Quelle von Messunsicherheit sind Schwankungen der Temperatur der Dickenmessvorrichtung. Insbesondere können thermische Ausdehnungen nach der Nullmessung, also der Messung ohne Werkstück, problematisch sein, da diese zu einer Änderung der Totstrecken führen kann. Durch die thermische Isolation schlagen Schwankungen der Temperatur der Umgebung nur wenig auf die Temperatur der Dickenmessvorrichtung durch, sodass auch bei schwankenden Umgebungstemperaturen eine geringe Messunsicherheit erreichbar ist. Es ist alternativ zusätzlich zudem möglich, dass die Dickenmessvorrichtung ein Thermometer aufweist, mittels dem die Temperatur zumindest einer der Arme und/oder der Traverse gemessen werden kann. Verlässt die so gemessene Temperatur ein vorgegebenes Soll-Temperaturintervall, so kann ein Alarm ausgegeben werden. Alternativ oder zusätzlich kann das Messergebnis anhand des Temperaturmesswerts korrigiert werden.

Günstig ist es zudem, wenn die Dickenmessvorrichtung ein Thermometer zum Messen der Lufttemperatur und/oder ein Hygrometer zum Messen der Luftfeuchtigkeit der Luft im Zwischenraum aufweist. Zusätzlich ist es günstig, wenn die Auswerteeinheit in diesem Fall ausgebildet ist zum Berechnen des Brechungsindex aus den gemessenen Daten, wobei die Dicke zumindest auch anhand des so bestimmten Brechungsindex bestimmt wird.

Vorzugsweise legt der dritte Lichtstrahl eine Messstreckenlänge außerhalb der Dickenmessvorrichtung zurück, die zwischen dem 0,85-fachen und dem 1,15-fachen der Korrekturstreckenlänge beträgt. Alternativ oder zusätzlich beträgt eine zweite freie Wegstrecke, die der zweite Lichtstrahl maximal außerhalb der Dickenmessvorrichtung zurücklegen kann, zwischen dem 0,85-fachen und dem 1,15-fachen der Korrekturstreckenlänge. Der Weg, den der erste bzw. der zweite Lichtstrahl maximal außerhalb der Dickenmessvorrichtung zurücklegen kann, kann der Abstand zwischen zwei Fenstern sein, durch die erste Lichtstrahl bzw. der zweite Lichtstrahl austreten. Existiert kein Werkstück, so tritt der erste Lichtstrahl aus dem ersten Fenster aus und in das zweite Fenster ein. In der Regel ist daher eine lichte Weite des Zwischenraums im Bereich der Fenster gleich der entsprechenden freien Wegstrecke. Wie weiter unten erläutert wird, ist die Messunsicherheit umso kleiner, je weniger die jeweilige freie Wegstrecke von der Korrekturstreckenlänge abweicht. Die oben genannten Merkmale führen daher zu einer besonders geringen Messunsicherheit.

Vorzugsweise verlaufen der erste Lichtstrahl und der zweite Lichtstrahl koaxial und antiparallel zueinander. Unter dem Merkmal, dass der zweite Lichtstrahl koaxial verlaufen, wird insbesondere verstanden, dass ein Abstand einer ersten Geraden von einer zweiten Geraden höchstens 100 $\mu$m beträgt, wobei die erste Gerade eine Ausgleichsgerade durch den ersten Lichtstrahl ist und die zweite Gerade die Ausgleichsgerade durch den zweite Lichtstrahl. In anderen Worten ist die erste Gerade diejenige Gerade, für die gilt, dass die aufintegrierte über die Erstreckung des Lichtstrahls quadrierte Abweichung zwischen der Geraden einerseits und den Maxima der Lichtintensität des zweiten Lichtstrahls andererseits minimal wird.

Unter dem Merkmal, dass der erste Lichtstrahl und der zweite Lichtstrahl antiparallel zueinander verlaufen, wird insbesondere verstanden, dass sie aufeinander zu verlaufen. Die erste Gerade bildet mit der zweiten Geraden vorzugsweise einen Winkel von höchstens 0,2 °, besonders bevorzugt höchstens 0,1 °.

Eine bevorzugte Ausführungsform der Dickenmessvorrichtung besitzt eine Blasvorrichtung zum kontinuierlichen Blasen von sauberer Luft oder auch Stickstoff in den Zwischenraum, wobei die Blasvorrichtung eine Temperatur-Konstanthaltevorrichtung aufweist, mittels der die Temperatur der ausgeblasenen Luft in einem vorgegebenen Temperaturintervall gehalten wird, wobei eine Intervallbreite dieses Temperaturintervalls höchstens 1 Kelvin beträgt.

Erfindungsgemäß ist zudem ein Walzwerk zum Herstellen einer Metallfolie, das eine Walzvorrichtung zum Walzen der Metallfolie und eine erfindungsgemäße Dickenmessvorrichtung aufweist, wobei das Walzwerk vorzugsweise eine Bearbeitungsvorrichtung aufweist. Die Dickenmessvorrichtung ist in Materialflussrichtung hinter der Walzvorrichtung angeordnet.

Die Bearbeitungsvorrichtung ist - sofern vorhanden - in Materialflussrichtung hinter der Dickenmessvorrichtung angeordnet. Bei der Bearbeitungsvorrichtung kann es sich beispielsweise um eine zweite Walzvorrichtung, eine Beschichtungsvorrichtung oder eine sonstige Vorrichtung zum Bearbeiten der Metallfolie handeln. In einem derartigen Walzwerk kann es zu häufigen Wechseln der Lufttemperatur, der Luftfeuchtigkeit und/oder der Konzentration an Spurengasen, insbesondere von Kohlenwasserstoffen, kommen. Diese haben einen signifikanten Einfluss auf das Messergebnis, sodass die erfindungsgemäße Dickenmessvorrichtung in einem derartigen Umfeld besonders vorteilhaft eingesetzt werden kann.

Günstig ist es, wenn das Walzwerk zwei erfindungsgemäße Dickenmessvorrichtungen aufweist, von denen eine in Materialflussrichtung vor der Walzvorrichtung angeordnet ist und eine in Materialflussrichtung hinter der Walzvorrichtung. Auf diese Weise kann der Walzprozess, den die Walzvorrichtung durchführt, überwacht werden.

Vorzugsweise besitzt das Walzwerk eine Regelung, die mit der Dickenmessvorrichtung und der Walzvorrichtung verbunden ist und eingerichtet ist zum automatischen Einstellen einer Walzkraft anhand der von der Dickenmessvorrichtung gemessenen Dicke, sodass sich die Dicke des Werkstücks einer vorgegebene Soll-Dicke annähert.

Im Folgenden wird die Erfindung anhand der beigefügten Figuren näher erläutert. Dabei zeigt

Figur 1    eine schematische Ansicht eines erfindungsgemäßen Walzwerks,

Figur 2    einen Querschnitt durch eine erfindungsgemäße Dickenmessvorrichtung und

Figur 3    eine schematische Darstellung des Vorgehens beim Berechnen der Dicke aus den Phasenmesswerten.

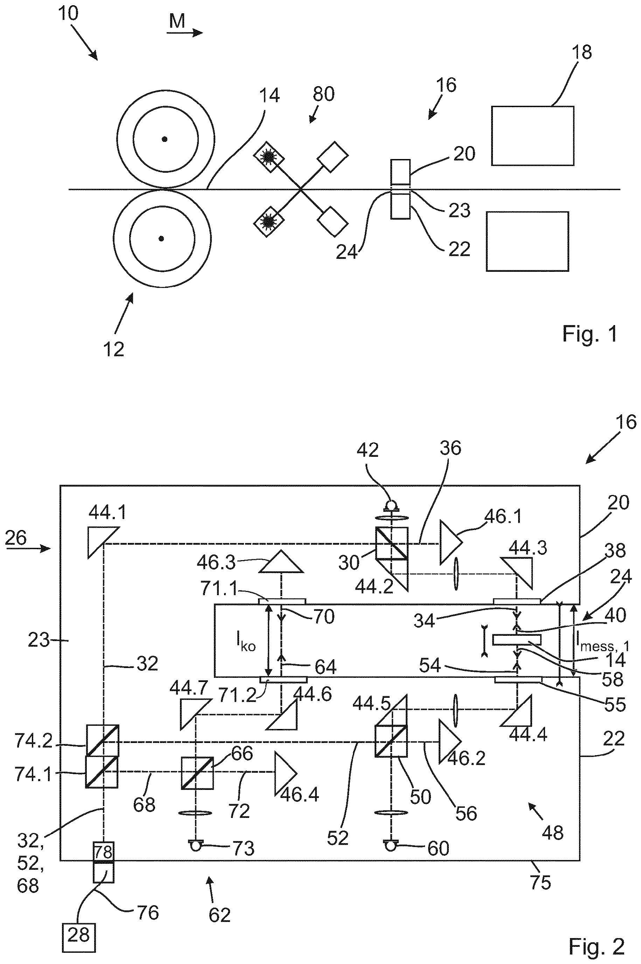

Figur 1 zeigt schematisch ein erfindungsgemäßes Walzwerk 10 mit einer Walzvorrichtung 12 zum Walzen einer Metallfolie 14. In einer Materialflussrichtung M hinter der Walzvorrichtung 12 ist eine erfindungsgemäße Dickenmessvorrichtung 16 angeordnet. Wiederum in Materialflussrichtung M hinter der Dickenmessvorrichtung 16 befindet sich eine Bearbeitungsvorrichtung 18, beispielsweise eine Beschichtungsvorrichtung oder eine weitere Walzvorrichtung.

Figur 1 zeigt, dass die Dickenmessvorrichtung 16 einen ersten Arm 20 und einen zweiten Arm 22 aufweist, die mittels einer Traverse 23 verbunden sind und zwischen denen ein Zwischenraum 24 ausgebildet ist.

Figur 2 zeigt die Dickenmessvorrichtung 16 in einem Querschnitt. Die Dickenmessvorrichtung 16 umfasst ein erstes Interferometer 26, das eine Lichtquelle 28 besitzt. Das erste Interferometer 26 umfasst zudem einen ersten Strahlteiler 30 zum Abteilen eines ersten Lichtstrahls 34 aus dem Quell-Lichtstrahl 32. Hinter dem ersten Strahlteiler verläuft der erste Lichtstrahls 34 als erster Referenz-Lichtstrahl 36.

Der erste Lichtstrahl 34 tritt durch ein erstes Fenster 38 aus der Dickenmessvorrichtung aus und fällt auf das Werkstück 14, wo es reflektiert wird. Auf diese Weise entsteht ein erster Rücklichtstrahl 40, der im Strahlteiler 30 mit dem ersten Referenz-Lichtstrahl 36 interferiert. Das entstehende Interferenzmuster wird von einem ersten Detektor 42 erfasst. Zum Leiten des Lichts dienen Strahlumlenker 44.1, 44.2, 44.3 sowie ein Retroreflektor 46.1.

Die Dickenmessvorrichtung 16 umfasst zudem ein zweites Interferometer 48, das die Lichtquelle 28 und einen zweiten Strahlteiler 50 aufweist. Der zweite Strahlteiler 50 teilt einen zweiten Quell-Lichtstrahl 52, der im vorliegenden Fall aus dem ersten Quell-Lichtstrahl 32 abgeteilt wurde, in einen zweiten Lichtstrahl 54 und einen zweiten Referenz-Lichtstrahl 56. Der zweite Lichtstrahl 54 tritt durch ein Fenster 55 in den Zwischenraum 24 ein wird vom Werkstück 14 reflektiert, sodass ein Rücklichtstrahler 58 entsteht, der mit dem zweiten Referenz-Lichtstrahl 56 interferiert. Das entstehende Interferenzmuster wird von einem zweiten Detektor 60 erfasst. Bei den Detektoren 42, 60 handelt es sich beispielsweise um Fotodioden oder ein Arrays aus Fotodioden.

Die Dickenmessvorrichtung 16 besitzt zudem ein drittes Interferometer 62 zum Bilden eines dritten Lichtstrahls 64 vom ersten Arm 20 zum zweiten Arm 22. Das dritte Interferometer 62 weist einen dritten Strahlteiler 66 auf, der einen dritten Quell-Lichtstrahl 68 in den dritten Lichtstrahl 64 und einen dritten Referenz-Lichtstrahl 72 teilt. Der dritte Lichtstrahl 64 tritt durch ein Fenster 71.1 in den Zwischenraum 24 ein und durch ein Fenster 71.2 aus. Das auf dem Strahlteiler 66 entstehende Interferenzmuster aus dem dritten Referenz-Lichtstrahl 72 und einem dritten Rücklichtstrahl 70, der nach Reflexion des dritten Lichtstrahls 64 an einem Retroreflektor 46.3 entsteht, wird mittels eines dritten Detektors 73 erfasst.

Im vorliegenden Fall teilen sich alle Interferometer 26, 48, 62 die gleiche Lichtquelle 28, aus deren Strahl mittels zweier Strahlteiler 74.1, 74.2 die jeweiligen Quell-Lichtstrahlen 32, 52, 68 erzeugt werden.

Die in Figur 2 gezeigten optischen Komponenten können auf einer Basis 75 montiert sein, beispielsweise einer Granitplatte. Es ist aber auch möglich, dass die Lichtquelle 28 - wie in Figur 1 gezeigt - nicht auf der Basis 75 montiert ist. Die Lichtquelle 28 ist kann - im vorliegenden Fall - mittels einer Glasfaserleitung 76 mit einem Anschluss 78 verbunden sein, mittels dem das Licht aus der Glasfaserleitung 76 in die Strahlengänge eingekoppelt wird.

Die Lichtquelle 28 gibt kohärentes Licht mit einer ersten Wellenlänge $\lambda_1$, $\lambda_2$ und einer dritten Wellenlänge $\lambda_3$ ab. Das erste Interferometer 26 misst eine erste Phase $\Phi_o$, das zweite Interferometer 48 eine zweite Phase $\Phi_u$. Das dritte Interferometer 62 misst eine dritte Phase $\Phi_{ko}$.

Nicht eingezeichnet ist, dass die Dickenmessvorrichtung 16 ein Gehäuse aufweist, das die Basis 75 umgibt und thermisch isoliert ist, beispielsweise mittels Isolationsmaterial, wie Glaswolle, Steinwolle oder Vakuumdämmplatten.

Der dritte Lichtstrahl 64 legt eine Strecke $I_{ko}$ im Zwischenraum 24 zurück. Der erste Lichtstrahl 34 kann maximal eine erste freie Wegstrecke $I_{mess,1}$ außerhalb der Dickenmessvorrichtung 16 zurücklegen, nämlich durch den Zwischenraum 24. Der zweite Lichtstrahl 54 kann maximal eine zweite freie Wegstrecke $I_{mess,2}$ außerhalb der Dickenmessvorrichtung 16 zurücklegen, wobei im vorliegenden Fall die zweite freie Wegstrecke $I_{mess,2}$ der ersten freien Wegstrecke $I_{mess,1}$ entspricht.

Zur Auswertung der Messergebnisse wird die 2f/3f Detektion verwendet. Das 2f/3f Detektionsverfahren ermöglicht eine parallele Detektion mehrerer Interferometersignale mit jeweils einem einzigen Detektor 42, 60, 73 bei verschiedenen Trägerfrequenzen $2\omega_{mi}$ und $3\omega_{mi}$. Das Verfahren ist wohl bekannt und beispielsweise in Meiners-Hagen et al., Meas. Sci. Techn. 15, 741 (2004) beschrieben.

Die Lichtquelle 28 umfasst in der vorliegenden Ausführungsform für jede verwendete Wellenlänge eine Laserdiode. Am Arbeitspunkt jeder dieser Laserdioden wird der Betriebsstrom mit der Frequenz $\omega_m$ moduliert. Dies modifiziert

sowohl die Intensität $I$ als auch die Frequenz $v$ des emittierten Laserstrahls: $v = v_0 + \Delta v \times \sin(\varpi_m t)$ , wobei $t$ der Zeit und $\Delta v$ dem induzierten Frequenzhub entspricht. Vernachlässigt man die Intensitätsmodulation, so misst man an einem Detektor das Signal

$$I = I_0 \left[ 1 + \cos\left( 4\pi \frac{l}{c} \left( v_0 + \Delta v \sin(\varpi_m t) \right) \right) \right] \equiv I_0 \left[ 1 + \cos\left( \Phi_0 + \Delta\Phi \sin(\varpi_m t) \right) \right] \tag{1}$$

wobei $l$ dem Gangunterschied der beiden Interferometerarme, $c$ der Lichtgeschwin-digkeit, $\Phi_0$ der zu messenden Inter-

$$\Delta\Phi = 4\pi \frac{\Delta v}{c} l$$

ferometerphase und der Amplitude der Phasenmodulation entspricht. Das Intensitätssignal (1) kann in Besselfunktionen $J_i(x)$ entwickelt werden:

$$I = I_0 \left[ \begin{array}{l} 1 + J_0\left(\Delta\Phi\right)\cos\left(\Phi_0\right) - 2J_1\left(\Delta\Phi\right)\sin\left(\varpi_m t\right)\sin\left(\Phi_0\right) \\ + 2J_2\left(\Delta\Phi\right)\cos\left(2\varpi_m t\right)\cos\left(\Phi_0\right) - 2J_3\left(\Delta\Phi\right)\sin\left(3\varpi_m t\right)\sin\left(\Phi_0\right) + ... \end{array} \right] \qquad (2)$$

Physikalisch bedeutet das, dass die Intensität mit Harmonischen der Modulationsfrequenz $\omega_m$ oszilliert. Die Amplitude der $i$-ten Harmonischen $i\omega_m$ ist proportional zum Wert der $i$-ten Besselfunktion $J_i(\Delta\Phi)$ sowie dem Sinus beziehungsweise Kosinuswert der Interferometerphase $\Phi_0$.

Die Armlängendifferenz $l$ und die Frequenzmodulationsamplitude sind so gewählt, dass die Amplitude zweier geeignet gewählter konsekutiver Besselfunktionen gleich groß ist, es also gilt $J_i(\Delta\Phi)=J_{i+1}(\Delta\Phi)$. Nun kann die Amplitudenmodulation durch die Diodenstrommodulation in 0-ter Näherung die Intensität bei der Fundamentalfrequenz $\omega_m$ stören. Bevorzugt wird daher bei $2\omega_m$ und $3\omega_m$ mit phasensensitiver Detektion gemessen, also einer Lock-In Technik, die Amplituden $I(2\omega_m)$ und $I(3\omega_m)$.

Es gilt dann

$$\Phi_0 = \arctan\left[\frac{I\left(3\varpi_m\right)}{I\left(2\varpi_m\right)}\right] = \arctan\left[\frac{\sin(\Phi_0)}{\cos(\Phi_0)}\right] = \arctan\left[\tan\left(\Phi_0\right)\right] \qquad (3)$$

Die experimentell detektierten Amplituden $I_{roh}(2\omega_m)$ und $I_{roh}(3\omega_m)$ werden um etwaige Anteile höherer Harmonischer korrigiert. Dies ist mit einer sogenannten Heydemannkorrektur möglich.

Bei der erfindungsgemäßen Dickenmessvorrichtung 16 emittiert die Lichtquelle 28 Laserstrahlung auf mindestens zwei Wellenlängen, die mit verschiedenen Modulationsfrequenzen $\omega_{mi}$ moduliert werden, sodass deren zweite und dritte Harmonische nicht zusammenfallen. Es ist dann möglich, die Interferenzphasen aller Wellenlängen eines jeden Einzelinterferometers 26, 48, 62 mit einem einzigen Detektor zu bestimmen. Die Phasen der einzelnen Wellenlängen werden beispielsweise per Lock-In Empfänger dann von den einzelnen Trägerfrequenzen demoduliert. Es sei darauf hingewiesen, dass es zudem noch andere Möglichkeiten gibt, die optischen Interferometerphasen zu messen.

Ein wichtiger Aspekt des erfindungsgemäßen Verfahrens ist, wie aus den drei Interferometern 62 (hier auch mit ko bezeichnet), 26 (hier auch mit o bezeichnet) und 48 (hier auch mit u bezeichnet) mit den jeweils drei Wellenlängen $\lambda_1$, $\lambda_2$, $\lambda_3$ die Dicke $l_x$ des Werkstücks eines Blechs im Endeffekt direkt gemessen wird. Das minimiert den Einfluss von Störfaktoren.

Die folgende Herleitung gilt für jede Wellenlänge gesondert, auf einen entsprechenden Index wird daher verzichtet. Aus den drei Phasen einer Messung mit einer Wellenlänge $\lambda_i$ wird der folgenden die effektive Phase $\Phi_{eff}$ berechnet:

$$\Phi_{eff}\left(\lambda_i, t\right) = \left[\Phi_{ko}\left(\lambda_i, t\right) - \left(\Phi_o\left(\lambda_i, t\right) + \Phi_u\left(\lambda_i, t\right)\right)\right]\bmod\left(2\pi\right) \qquad (4)$$

Jede Interferometerphase $\alpha$ (mit $\alpha$ = o, u und ko) misst die Differenz aus Mess- und Referenzpfad $l_{Ref,\alpha}$, wobei Teile des Messpfades $l_{Mess,\alpha}$ sich in Luft ($l_{MessL,\alpha}$) und andere sich im C-Rahmen, also innerhalb der Arme 20, 22 und der Traverse 23, befinden ($l_{MessC,\alpha}$). Der Phasen-bestimmende Weglängenunterschied $l_\alpha$ eines Interferometers beträgt also

$$l_\alpha = 2\left(l_{MessL,\alpha} + l_{MessC,\alpha}\right) - 2l_{Ref,\alpha} \qquad (5)$$

für alle Interferometer. Wenn man nun die der effektiven Phase entsprechende effektive Länge $l_{eff}$ bildet, so erhält man

$$2\left(l_{\mathrm{MessL,\,ko}} - \left(l_{\mathrm{MessL,o}} + l_{\mathrm{MessL,u}}\right)\right)$$
$$l_{\mathrm{eff}} = +2\left(l_{\mathrm{MessC,\,ko}} - \left(l_{\mathrm{MessC,o}} + l_{\mathrm{MessC,u}}\right)\right) = 2l_x + 2l_{\mathrm{spreiz}} + 2l_{T,ko} - 2\left(l_{T,o} + l_{T,u}\right)$$
$$-2\left(l_{\mathrm{Ref,\,ko}} - \left(l_{\mathrm{Ref,o}} + l_{\mathrm{Ref,u}}\right)\right)$$

$$(6)$$

mit den Totstrecken $l_{\mathrm{T},\alpha} \equiv l_{\mathrm{MessC},\alpha} - l_{\mathrm{Ref},\alpha}$, der Störgröße $l_{\mathrm{spreiz}}$, die mangelnde Parallelität des C-Rahmens, also innerhalb der Arme 20, 22 und der Traverse 23, widerspiegelt, und der Messgröße $l_x$.

Um $l_x$ aus der effektiven Länge zu extrahieren, müssen die anderen Weglängenunterschiede bestimmt werden. Eine nahe liegende Möglichkeit scheint die Verwendung von Normalen mit bekannten kalibrierten Längen $l_{x,\mathrm{kal}}$ und der Messung der dazu gehörigen effektiven Länge $l_{\mathrm{eff,kal}}$ Dann ließe sich Gleichung (6) auswerten und umstellen zu

$$2l_{\mathrm{spreiz}} + 2l_{T,ko} - 2\left(l_{T,o} + l_{T,u}\right) = l_{\mathrm{eff,kal}} - 2l_{x,\mathrm{kal}}$$

$$(7)$$

Dies hat jedoch zwei Anforderungen: Erstens muss die Referenzdicke $l_{x,\mathrm{kal}}$ mit interferometrischer Genauigkeit bekannt sein, da ein interferometrischer Gangunterschied bekannt sein muss. Jede Unsicherheit in dieser Messung findet sich in der Interpretation der danach gemessenen Phase $\Phi_{\mathrm{eff}}$ wieder. Eine grundlegende unfreundliche Eigenschaft der Mehrwellenlängeninterferometrie ist, dass sich Unsicherheiten in der Beobachtung mit dem Verhältnis synthetischer zu optischer Wellenlänge hochskalieren. Im Fall einer ersten synthetischen Wellenlänge $\Lambda_1 = 20\ \mu$m und einer ersten Wellenläge von $\lambda_1 = 760$ nm ergibt sich ungefähr ein Faktor 25.

Zweitens darf das Werkstück selbst eine Rayleigh-Länge des abbildenden Systems des Interferometers nicht überschreiten. Die interferometrische Auswertung geht davon aus, dass beide Oberflächen der Probe (also normalerweise der Folie von einigen Mikrometern Dicke) auf beiden Seiten von parallelen, ungekrümmten Wellenfronten angetastet werden kann. Bereits ab wenigen 100 $\mu$m Dicke kann davon nicht mehr ausgegangen werden.

Derartige Einstellnormale sind aber in der Praxis wenig geeignet / nicht vorhanden. Zwar kann man Endmaße kann mit sehr hohem Aufwand mit Unsicherheiten von wenigen Nanometern kalibrieren. Standardmäßig erhält man die besten Unsicherheiten aber in der Größenordnung von 100 Nanometern für die kleinsten Endmaße. Parallele Endmaße mit einer Dicke $l_x \leq 0,1$ mm und entsprechend kleiner Messunsicherheit sind nur mit hohem Aufwand und Kosten in der notwendigen Oberflächengüte herstellbar. Zudem ist bei einer Verwendung im Walzwerk auch mit Kondensation von Ölen oder Walzemulsionen zu rechnen, welche die Dicke durchaus im Bereich von einigen Nanometern verändern kann, womit die notwendige Maßhaltigkeit als Einstellnormal nicht mehr gegeben wäre.

Gemäß einer bevorzugten Ausführungsform der Erfindung wird daher ausgenutzt, dass der erste Lichtstrahl 34 (auch Lichtstrahl o genannt) und der zweite Lichtstrahl 54 (auch Lichtstrahl u genannt) antiparallel und kollinear verlaufen. Dabei interferiert der zweite Lichtstrahl 54 des zweiten Interferometers 48 (auch Interferometer u genannt) mit dem ersten Referenz-Lichtstrahl 36 des ersten Interferometers 26 (auch Interferometer o genannt) und vice versa im jeweiligen Strahlteilern 30, 50, vor dem jeweiligen Detektor 42, 60.

Die Interferometer 26, 48 beginnen jedoch schon früher, mit der Strahlaufteilung in unteren und oberen Zweig, nämlich im Strahlteiler 74.2 (siehe Figur 2). Dies führt zu zusätzlichen Wegen $l_{\mathrm{To+}}$ und $l_{\mathrm{Tu+}}$. Damit ergeben sich für die Signale in den o und u Detektoren:

$$l_o = l_{\mathrm{To+}} + l_{\mathrm{MessC,o}} + l_{\mathrm{MessL,ko}} + l_{\mathrm{spreiz}} + l_{\mathrm{MessC,u}} - \left(l_{\mathrm{Tu+}} + 2l_{\mathrm{Ref,u}}\right)$$

$$(8)$$

$$l_u = l_{\mathrm{Tu+}} + l_{\mathrm{MessC,u}} + l_{\mathrm{MessL,ko}} + l_{\mathrm{spreiz}} + l_{\mathrm{MessC,o}} - \left(l_{\mathrm{To+}} + 2l_{\mathrm{Ref,o}}\right)$$

$$(9)$$

Der Kompensationsweglängenunterschied $l_{ko}$ bleibt formal unverändert zu (5). Bildet man nun die effektive Länge nach Gleichung (6) fallen die zusätzlichen Terme heraus und man erhält:

$$l_{\mathrm{eff}} = 2l_{\mathrm{spreiz}} + 2l_{T,ko} - 2\left(l_{T,o} + l_{T,u}\right)$$

$$(10)$$

Die dazugehörige Phase entspricht der in Gleichung (4) definierten effektiven Phase für t = 0 (die auch Offset-phase $\Phi_{eff,0}$ genannt werden könnte):

$$\Phi_{eff}(\lambda_i, 0) = \left[\Phi_{ko}(\lambda_i, 0) - \left(\Phi_o(\lambda_i, 0) + \Phi_u(\lambda_i, 0)\right)\right]\mathrm{mod}(2\pi) \tag{11}$$

Die Messphase $\Phi_{mess}$ gemäß der Gleichung

$$\Phi_{mess}(\lambda_i, t) = \left[\Phi_{eff}(\lambda_i, t) - \Phi_{eff}(\lambda_i, 0)\right]\mathrm{mod}(2\pi) \tag{11a}$$

als Differenz der effektiven Phase $\Phi_{eff}(\lambda_i, t)$ mit Werkstück und der Offsetphase $\Phi_{eff}(\lambda_i, 0)$ (ohne Werkstück) definiert. Diese Phasendifferenz entspricht mit den Gleichungen (10) und (6) der folgenden Länge $l_{mess}$:

$$l_{mess} = \begin{aligned} &2l_x(t) + +2(l_{spreiz}(t) - l_{spreiz}(0)) \\ &+2\left(l_{T,ko}(t) - \left(l_{T,o}(t) + l_{T,u}(t)\right)\right) \equiv 2\left(l_x(t) + \delta l(t)\right) \\ &-2\left(l_{T,ko}(0) - \left(l_{T,o}(0) + l_{T,u}(0)\right)\right) \end{aligned} \tag{12}$$

Diese Berechnung nach Gleichung (12) ist ohne Modulo-Operation durchgeführt. Die Modulo-Operation ist nicht echt assoziativ. Eine ausführliche Simulation unter Berücksichtigung der Modulo-Operation hat jedoch gezeigt, dass die obige Betrachtung korrekt ist. Aus den Formeln (12) und (11a) folgt, dass Messphase $\Phi_{mess}$ und Werkstückdicke $l_x$ verknüpft sind über

$$\Phi_{mess}(\lambda_i, t) = \left[\frac{4\pi}{\lambda_i}\left(n_{Luft}(t)l_x + \delta l(n_{Luft}(t), n_C(t), t)\right)\right]\mathrm{mod}(2\pi), \tag{12a}$$

wenn man die in dieser Diskussion verwendeten optischen Wege als Produkt von Brechzahl und geometrischer Länge betrachtet. Für konstante stabile Verhältnisse heben sich die Störterme auf. Da davon nicht perfekt ausgegangen werden kann, ist es vorteilhaft, den Einfluss von Störungen konstruktiv zu minimieren.
Der Term $\delta l(n_{Luft}(t), n_C(t), t)$ beschreibt den verbleibenden Einfluss dieser Störungen. Für die Bestimmung der gesuchten Dicke $l_x$ wird der Term als null angesehen.
Es werden natürlich nur Phasen modulo $2\pi$ detektiert. Auf die Entfaltung zur Bestimmung der makroskopischen Dicke $l_x$ wird im Folgenden genauer eingegangen. Dafür muss zunächst die Information aller Farben zu sogenannten "synthetischen Phasen" kombiniert werden und ggfs. zusätzlich auf einen mit einem anderen Sensor, z.B. einem Triangulationssensor, ermittelten Startwert zurückgegriffen werden.
Bei jeder Messung werden für die drei optischen Wellenlängen $\lambda_i$ (i=1,2,3) drei Messphasen $\Phi_{mess,i}$ nach Gleichung (11a) gebildet. Aus diesen lassen sich sogenannte "synthetische Phasen" $\phi_{synth,j}$ bilden über

$$\phi_{synth,j} = \Phi_{mess,i} - \Phi_{mess,k} \tag{13}$$

mit $i \neq k$. Diese sind formal äquivalent zu Phasen einer synthetischen Messwellenlänge

$$\Lambda^j = \frac{\lambda_i \lambda_k}{|\lambda_i - \lambda_k|} \tag{14}$$

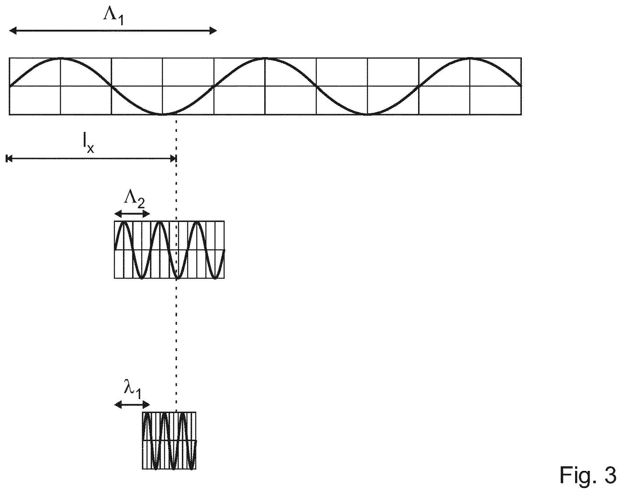

Die halbe synthetische Wellenlänge entspricht dem Eindeutigkeitsbereich, den man mit der Kenntnis dieser beiden optischen Phasen erreichen kann. Da Unsicherheiten jedoch mit dem Verhältnis $\Lambda^j / \lambda$ skalieren, kann man diese nicht "unendlich" groß wählen, sondern wählt eine Folge aus kleiner werdenden synthetischen Wellenlängen (vgl. Figur 3).
Für die Wahl können folgende Kriterien einfließen:

1. Eine Maßhaltigkeit von 0,1 $\mu$m wird für Metallfolien der Dicke von typischerweise 5 - 30 $\mu$m benötigt.

2. Eine Phasenauflösung der optischen Phasen von $\pi/50$ ist erreichbar.

3. Es müssen geeignete Laserdioden verfügbar sein.

4. Integriert man in das Banddickenmessgerät zusätzlich einen anderen Dickensensor wie zum Beispiel einen Triangulationssensor, so kann man auf einen Startwert $l_{vor}$ zurückgreifen.

Gut geeignet sind z. B. die drei optischen Wellenlängen von $\lambda_1$ = 761 nm,

$\lambda_2$ = 767 nm und $\lambda_3$ = 785 nm. Damit ergibt sich eine erste synthetische Wellenlänge von $\Lambda_1 \approx 100$ $\mu$m und $\Lambda_2 \approx 25$ $\mu$m, was Eindeutigkeitsbereichen von 50 $\mu$m und 12,5 $\mu$m entspricht. Die erfindungsgemäße Dickenmessvorrichtung kann damit die Dicke $l_x$ von Folien zwischen 5-30 $\mu$m ohne Grob-Dickenmesser 80 messen.

Damit ein Walzwerk nicht für dickere Bleche den Sensor umbauen muss, ist gemäß einer bevorzugten Ausführungsform jedoch ein Grob-Dickenmesser 80 vorhanden, insbesondere ein Triangulationssensor, mittels dem die Dicke $l_x$ so genau bestimmbar ist, dass der Wellenzug der größten synthetischen Wellenlänge bestimmt werden kann. Mit dem in Figur 2 gezeigten Vorgehen wird dann die Dicke $l_x$ präzise bestimmt. Wird ein Triangulationssensor mit einer Unsicherheit von maximal 4 $\mu$m verwendet, kann schon die die erste synthetische Wellenlänge vorzugsweise 25$\pm$ 5 $\mu$m genügen, um Sub-Mikrometer Genauigkeiten zu erreichen.

Vorzugsweise werden zwei synthetischen Wellenlängen verwendet. Dadurch wird das Verfahren robuster gegen Rauschen.

## Mathematische Details zur Entfaltung

Figur 3 illustriert die Grundidee des iterativen Verfahrens -zur Bestimmung der Dicke $l_x$ mit hoher Genauigkeit aus den Phasenbeobachtungen. Als Ausgangspunkt liegt ein Startwert $l_{vor}$ = $l_1$ für die absolute Dicke vor. Dieser kann beispielsweise aus der synthetischen Wellenlänge, dem Grob-Dickenmesser 80 oder durch Kenntnis des Walzprozesses bekannt sein. Kann nach Formel (14) aus den optischen Wellenlängen $\lambda_j$ und $\lambda_k$ (mit $\lambda_j > \lambda_k$) der Quelle eine synthetische Wellenlänge $\Lambda_1$ konstruiert werden, für die gilt $\Lambda_{1/2} > l_x$, so kann der Startwert auch nach Formeln (12a) und (13) direkt aus der interferentiellen Messung gebildet werden über

$$l_{\mathrm{vor}} = l_1 = \frac{\phi_{\mathrm{synth,1}}}{4\pi}\Lambda_1 = \frac{\Phi_{\mathrm{mess,j}} - \Phi_{\mathrm{mess,k}}}{4\pi} \times \frac{\lambda_j\lambda_k}{\lambda_j - \lambda_k} \qquad (15)$$

Dieser Startwert $l_{vor}$ für die Dicke kann mit den Phasenmessergebnissen aus dem Interferometer verbessert werden. Dafür wird die synthetische Phase $\phi_{\mathrm{synth,\,2}}$ nach Formel (13) einer synthetischen Wellenlänge aus zwei optischen Wellenlängen verwendet.

Wurde der Vorwert nach Formel (15) bereits aus einer synthetischen Phase bestimmt, so gilt sinnvollerweise $\Lambda_1 > \Lambda_2$, da die Messunsicherheit für Beobachtungen mit kleineren synthetischen Wellenlängen abnimmt. Ist die Unsicherheit des Startwerts besser als $\Lambda_2/4$ , so kann dieser herangezogen werden, um die Messung mit der kleineren synthetischen Wellenlänge $\Lambda_2$ zu entfalten. Aus der dazu gehörigen synthetischen Phase $\phi_{\mathrm{synth,\,2}}$ kann der Wert $l_2$ als Abschätzung der echten absoluten Dicke $l_x$ mit höherer Genauigkeit bestimmt werden über

$$l_2 = \mathrm{Floor}\left[\frac{2l_1}{\Lambda_2} - \frac{\phi_{\mathrm{synth,2}}}{2\pi} + 0.5\right]\frac{\Lambda_2}{2} + \frac{\phi_{\mathrm{synth,2}}}{2\pi}\frac{\Lambda_2}{2} \qquad (16)$$

Die Funktion Floor(x) gibt dabei den kleinsten ganzzahligen Wert z zurück, für den gilt $z \leq x$. Hat man eine weitere kürzere synthetische Wellenlänge zur Verfügung kann man diesen Schritt wiederholen.

Ist die Unsicherheit der genauesten Abschätzung $l_n$ ($n > 1$) der Werkstückdicke, die derart mit synthetischen Wellenlängen erreicht wird, kleiner als ein Viertel einer verwendeten optischen Wellenlänge $\lambda_q$, so kann dieses Ergebnis wiederum verwendet werden, um die auch noch die dazugehörige optische Messphase $\Phi_{\mathrm{mess,q}}$ zu entfalten nach

$$l_{n+1} = \mathrm{Floor}\left[\frac{2l_n}{\lambda_q} - \frac{\Phi_{\mathrm{mess,q}}}{2\pi} + 0.5\right]\frac{\lambda_q}{2} + \frac{\Phi_{\mathrm{mess,q}}}{2\pi}\frac{\lambda_q}{2} \qquad (17)$$

Kann eine Abschätzung der Messdicke $l_m$ ($m > 1$) der Werkstückdicke durch eine weitere Entfaltung nicht weiter verbessert werden, so entspricht diese dem ermittelten Messwert für die Dicke des Werkstücks, d.h.

$$l_x = l_m \qquad (18)$$

Für eine konkrete Konfiguration können aus den bekannten Wellenlängen, der erreichbaren bekannten Unsicherheiten der ermittelten optischen Phasen und der angestrebten Messunsicherheit der Werkstückdicke $l_x$ geeignete Zwischenschritte nach Formeln (16) und ggfs. (17) sowie der Abschluss nach Formel (18) festgelegt werden.

**Beispiel**

Das Blech habe eine Dicke von $l_x$ = 25,516 μm. Der Grob-Dickenmesser 80 liefert einen Vorwert von d = 27,1 μm. Die Wellenlänge $\lambda_1$ = 761 nm liefert einen Phasenwert mit begrenzter Genauigkeit von 0,401542, die Wellenlänge $\lambda_2$ = 785 nm einen (ebenfalls imperfekten) Phasenwert von 0,0360284. Die synthetische Phase $\phi_{synth, 2}$ beträgt dann 0,365513 zur synthetischen Wellenlänge $\Lambda_2$ = 24,981 μm. Dann liefert die Auswertung mit Gleichung (16) eine verbesserte Längenabschätzung $l_2$ von 25,615 μm. In diesem Fall reicht die erhaltene Genauigkeit der Blechdicke aus. Es wird auf eine weitere Verbesserung durch die optische Phasenmessung verzichtet

### Bezugszeichenliste

| | | | |
|---|---|---|---|
| 10 | Walzwerk | 56 | zweiter Referenz-Lichtstrahl |
| 12 | Walzvorrichtung | 58 | zweiter Rücklichtstrahl |
| 14 | Metallfolie | | |
| 16 | Dickenmessvorrichtung | 60 | zweiter Detektor |
| 18 | Bearbeitungsvorrichtung | 62 | drittes Interferometer |
| | | 64 | dritter Lichtstrahl |
| 20 | erster Arm | 66 | dritter Strahlteiler |
| 22 | zweiter Arm | 68 | dritter Quell-Lichtstrahl |
| 23 | Traverse | | |
| 24 | Zwischenraum | 70 | dritter Rücklichtstrahl |
| 26 | erstes Interferometer | 71 | Fenster |
| 28 | Lichtquelle | 72 | dritter Referenz-Lichtstrahl |
| | | 73 | dritter Detektor |
| 30 | erster Strahlteiler | 74 | Strahlteiler |
| 32 | erster Quell-Lichtstrahl | 75 | Basis |
| 34 | erster Lichtstrahl | 76 | Glasfaserleitung |
| 36 | erster Referenz-Lichtstrahl | 78 | Anschluss |
| 38 | erstes Fenster | | |
| | | 80 | Grob-Dickenmesser |
| 40 | erster Rücklichtstrahl | | |
| 42 | erster Detektor | $\Phi_o$ | erste Phase |
| 44 | Strahlumlenker | $\Phi_u$ | zweite Phase |
| 46 | Retroreflektor | $\Phi_{ko}$ | dritte Phase |
| 48 | zweites Interferometer | $\Phi_{eff}$ | effektive Phase |
| | | $l_x$ | Dicke |
| 50 | zweiter Strahlteiler | M | Materialflussrichtung |
| 52 | zweiter Quell-Lichtstrahl | | |
| 54 | zweiter Lichtstrahl | | |
| 55 | Fenster | | |

## Patentansprüche

1. Dickenmessvorrichtung (16) zur Messung einer absoluten Dicke flacher Werkstücke, mit

(a) einem ersten Arm (20) und einem zweiten Arm (22), die einen Zwischenraum (24) zum Einführen des Werkstücks zwischen einander bilden,
(b) einem ersten Interferometer (26) zum

- Aussenden eines ersten Lichtstrahls (34) aus dem ersten Arm (20) auf das Werkstück (14) und
- Erfassen einer ersten Phase ($\Phi_o$) zwischen dem ersten Lichtstrahl (34) und einem vom Werkstück (14) reflektierten ersten Rücklichtstrahl (40),

(c) einem zweiten Interferometer (48) zum

- Aussenden eines zweiten Lichtstrahls (54) aus dem zweiten Arm (22) auf das Werkstück (14) und
- Erfassen einer zweiten Phasen ($\Phi_u$) zwischen dem zweiten Lichtstrahl (54) und einem vom Werkstück (14) reflektierten zweiten Rücklichtstrahl (58),

(d) einem dritten Interferometer (62) zum

- Bilden eines dritten Lichtstrahls (64) von einem Arm (20) zum anderen Arm (22) abseits des Werkstücks (14) und
- Erfassen einer Kontroll-Phase ($\Phi_{ko}$) und

(e) einer Auswertevorrichtung zum Ermitteln der absoluten Dicke des Werkstücks (14) aus Interferometerdaten der Interferometer (26,48,62),

**dadurch gekennzeichnet, dass**
(f) die Auswertevorrichtung eingerichtet ist zum automatischen

- Bestimmen einer effektiven Phase ($\Phi_{eff}$) aus der ersten Phase ($\Phi_o$), der zweiten Phase ($\Phi_u$) und der Kontroll-Phase ($\Phi_{ko}$) und
- Bestimmen der absoluten Dicke ($l_x$) aus einer Messphase ($\Phi_{mess}$),
- wobei die Messphase ($\Phi_{mess}$) eine Differenz ist aus

der effektiven Phase ($\Phi_{eff}$) mit Werkstück (14) im Zwischenraum (24) und
der effektiven Phase ($\Phi_{eff}$) ohne Werkstück (14) im Zwischenraum (24),

- wobei die effektive Phase ($\Phi_{eff}$) ohne Werkstück (14) im Zwischenraum (24) eine Offsetphase ist.

2. Dickenmessvorrichtung (16) nach Anspruch 1, **dadurch gekennzeichnet, dass**

(a) das erste Interferometer (26) und das zweite Interferometer (48) eine Lichtquelle (28) aufweisen, die ausgebildet ist zum Abgeben von Licht einer ersten Wellenlänge ($\lambda_1$) und von Licht zumindest einer zweiten Wellenlänge ($\lambda_2$) und dass
(b) für die Wellenlängen ($\lambda_1$, $\lambda_2$) gilt, dass eine erste synthetische Wellenlänge ($\Lambda_1 = (\lambda_1 \cdot \lambda_2) / (\lambda_2 - \lambda_1)$) der ersten und zweiten Wellenlänge zwischen 1 und 50 Mikrometer beträgt.

3. Dickenmessvorrichtung (16) nach dem vorhergehenden Anspruch, **dadurch gekennzeichnet, dass** die Lichtquelle (28) ausgebildet ist zum Abgeben von Licht einer dritten Wellenlänge ($\lambda_3$), die so gewählt ist, dass eine zweite synthetische Wellenlänge ($\Lambda_2 = (\lambda_1 \cdot \lambda_3) / (\lambda_3 - \lambda_1)$) der ersten und dritten Wellenlänge größer ist als die erste synthetischen Wellenlänge ($\Lambda_1$) und höchstens 200 Mikrometer beträgt.

4. Dickenmessvorrichtung (16) nach einem der vorstehenden Ansprüche, **gekennzeichnet durch**

(a) einen Absolut-Dickenmesser zum Bestimmen eines Grob-Dickenmesswerts der absoluten Dicke des Werkstücks (14),
(b) wobei die Auswertevorrichtung eingerichtet ist zum automatischen Bestimmen der Dicke des Werkstücks (14) aus dem Grob-Dickenmesswert und der Messphase ($\Phi_{mess}$),

5. Dickenmessvorrichtung (16) nach einem der vorstehenden Ansprüche, **gekennzeichnet durch** eine thermische Isolation der Arme (20,22) und einer die Arme verbindenden Traverse (23).

6. Dickenmessvorrichtung (16) nach einem der vorstehenden Ansprüche, **dadurch gekennzeichnet, dass** die Dickenmessvorrichtung (16) so ausgestaltet ist, dass

(a) der dritte Lichtstrahl (64) eine Korrekturstreckenlänge ($I_{ko}$) außerhalb der Dickenmessvorrichtung (16) zurücklegt und
(b) eine freie erste Wegstrecke ($I_{mess,1}$), die der erste Lichtstrahl (34) maximal außerhalb der Dickenmessvorrichtung (16) zurücklegen kann, zwischen dem 0,85-fachen und dem 1,15-fachen der Korrekturstreckenlänge ($I_{ko}$) beträgt, und/oder
(c) eine freie zweite Wegstrecke ($I_{mess,2}$), die der zweite Lichtstrahl (54) maximal außerhalb der Dickenmessvorrichtung (16) zurücklegen kann, zwischen dem 0,85-fachen und dem 1,15-fachen der Korrekturstreckenlänge ($I_{ko}$) beträgt.

7. Dickenmessvorrichtung (16) nach einem der vorstehenden Ansprüche, **dadurch gekennzeichnet, dass** die Dickenmessvorrichtung (16) so ausgestaltet ist, dass der erste Lichtstrahl (34) und der zweite Lichtstrahl (54) koaxial und antiparallel, insbesondere aufeinander zu, verlaufen.

8. Walzwerk (10) zum Herstellen einer Metallfolie (14), mit

(a) einer Walzvorrichtung (12) zum Walzen der Metallfolie (14) und
(b) einer Dickenmessvorrichtung (16) nach einem der vorstehenden Ansprüche, die in einer Materialflussrichtung (M) hinter der Walzvorrichtung (12) angeordnet ist.

9. Walzwerk nach Anspruch 8, **gekennzeichnet durch**
eine Bearbeitungsvorrichtung (18), die in Materialflussrichtung (M) hinter der Dickenmessvorrichtung (16) angeordnet ist.

10. Walzwerk nach Anspruch 9, **dadurch gekennzeichnet, dass**
die Bearbeitungsvorrichtung (18), die in Materialflussrichtung (M) hinter der Dickenmessvorrichtung (16) angeordnet ist, eine zweite Walzvorrichtung (12) ist.

11. Verfahren zum Messen einer absoluten Dicke flacher Werkstücke mit den Schritten:

(i) Einführen des Werkstücks (14) in einen Zwischenraum (24) einer Dickenmessvorrichtung (16) mit

(a) einem ersten Arm (20) und einem zweiten Arm (22), die den Zwischenraum (24) zwischen einander bilden,
(b) einem ersten Interferometer (26) zum

- Aussenden eines ersten Lichtstrahls (34) aus dem ersten Arm (20) auf das Werkstück (14) und
- Erfassen einer ersten Phase ($\Phi_o$) zwischen dem ersten Lichtstrahl (34) und einem vom Werkstück (14) reflektierten ersten Rücklichtstrahl (40),

(c) einem zweiten Interferometer (48) zum

- Aussenden eines zweiten Lichtstrahls (54) aus dem zweiten Arm (22) auf das Werkstück (14) und
- Erfassen einer zweiten Phase ($\Phi_u$) zwischen dem zweiten Lichtstrahl (56) und einem vom Werkstück (14) reflektierten zweiten Rücklichtstrahl (58) und

(d) einem dritten Interferometer (62) zum

- Bilden eines dritten Lichtstrahls (64) von einem Arm (20) zum anderen Arm (22) abseits des Werkstücks (14) und
- Erfassen einer Kontroll-Phase ($\Phi_{ko}$),

(ii) Bestimmen einer effektiven Phase ($\Phi_{eff}$) aus der ersten Phase ($\Phi_o$), der zweiten Phase ($\Phi_u$) und der Kontroll-Phase ($\Phi_{ko}$) und
(iii) Bestimmen der absoluten Dicke ($I_x$) aus einer Messphase ($\Phi_{mess}$), wobei

die Messphase ($\Phi_{mess}$) eine Differenz ist aus

der effektiven Phase ($\Phi_{eff}$) mit Werkstück (14) im Zwischenraum (24) und
der effektiven Phase ($\Phi_{eff}$) ohne Werkstück (14) im Zwischenraum (24),

wobei die effektive Phase ($\Phi_{eff}$) ohne Werkstück (14) im Zwischenraum (24) eine Offsetphase ist.

12. Verfahren nach Anspruch 11, **gekennzeichnet durch** die Schritte:

(i) Interferieren-Lassen des ersten Lichtstrahls (34) und des zweiten Lichtstrahls (54), ohne dass ein Werkstück (14) einen der Lichtstrahlen (34,54) reflektiert, sodass eine effektive Null-Phase ($\Phi_{eff,0}$) als effektive Phase ohne Werkstück (14) im Zwischenraum erhalten wird,
(ii) Einbringen des Werkstücks (14) in den Zwischenraum (24), sodass die Lichtstrahlen (34,54) vom Werkstück (14) reflektiert werden,
(iii) Messen der effektiven Phase mit Werkstück ($\Phi_{eff,t}$),
(iv) Ermitteln der Mess-Phase ($\Phi_{mess}$) aus den gemessenen effektiven Phase mit Werkstück ($\Phi_{eff,t}$) und der Null-Phase ($\Phi_{eff,0}$) und
(v) Berechnen der absoluten Dicke ($l_x$) aus der Mess-Phase ($\Phi_{mess}$).

## Claims

1. A thickness measurement device (16) for measuring an absolute thickness of flat workpieces, with

(a) a first arm (20) and a second arm (22), which form an intermediate space (24) for inserting the workpiece between them,
(b) a first interferometer (26) for

- emitting a first light beam (34) from the first arm (20) onto the workpiece (14) and
- detecting a first phase ($\Phi_o$) between the first light beam (34) and a first return beam (40) reflected by the workpiece (14),

(c) a second interferometer (48) for

- emitting a second light beam (54) from the second arm (22) onto the workpiece (14) and
- detecting a second phase ($\Phi_o$) between the second light beam (54) and a second return light beam (58) reflected by the workpiece (14),

(d) a third interferometer (62) for

- forming a third light beam (64) from one arm (20) to another arm (22) away from the workpiece (14), and
- detecting a control phase ($\Phi_{ko}$) and

(e) an evaluation device for determining the absolute thickness of the workpiece (14) from interferometer data of the interferometer (26, 48, 62),

**characterised in that**
(f) the evaluation unit is configured to automatically

- determine an effective phase ($\Phi_{eff}$) from the first phase ($\Phi_o$), the second phase ($\Phi_u$) and the control phase ($\Phi_{ko}$) and
- determine the absolute thickness ($l_x$) from a measurement phase ($\Phi_{mess}$),
- the measurement phase ($\Phi_{mess}$) being a difference from

the effective phase ($\Phi_{eff}$) with the workpiece (14) in the intermediate space (24) and
the effective phase ($\Phi_{eff}$) without the workpiece (14) in the intermediate space (24),

- the effective phase ($\Phi_{eff}$) without the workpiece (14) in the intermediate space (24) being an offset phase.

2. The thickness measurement device (16) according to claim 1, **characterised in that**

    (a) the first interferometer (26) and the second interferometer (48) comprise a light source (28) that is designed to emit light of a first wavelength ($\lambda_1$) and light of at least a second wavelength ($\lambda_2$), and that
    (b) the following applies for the wavelengths ($\lambda_1$, $\lambda_2$): a first synthetic wavelength ($\Lambda_1 = (\lambda_1 \cdot \lambda_2) / (\lambda_2 - \lambda_1)$) of the first and second wavelength is between 1 and 50 micrometres.

3. The thickness measurement device (16) according to the preceding claim, **characterised in that**
the light source (28) is designed to emit light of a third wavelength ($\lambda_3$), which is selected in such a way that a second synthetic wavelength ($\Lambda_2 = (\lambda_1 \cdot \lambda_3) / (\lambda_3 - \lambda_1)$) of the first and third wavelength is greater than the first synthetic wavelength ($\Lambda_1$) and is a maximum of 200 micrometres.

4. The thickness measurement device (16) according to one of the preceding claims, **characterised by**

    (a) an absolute thickness measure for determining a rough thickness measurement value of the absolute thickness of the workpiece (14),
    (b) the evaluation device being configured to automatically determine the thickness of the workpiece (14) from the rough thickness measurement value of the measurement phase ($\Phi_{mess}$).

5. The thickness measurement device (16) according to one of the preceding claims, **characterised by** a thermal insulation of the arms (20, 22) and a traverse (23) connecting the arms.

6. The thickness measurement device (16) according to one of the preceding claims, **characterised in that** the thickness measurement device (16) is designed in such a way that

    (a) the third light beam (64) covers a correction path length ($l_{ko}$) outside of the thickness measurement device (16) and
    (b) a first free distance ($l_{mess,1}$) that the first light beam (34) can cover at most outside of the thickness measurement device (16) is between 0.85 and 1.15-times the correction path length ($l_{ko}$), and/or
    (c) a second free distance ($l_{mess,2}$) that the second light beam (54) can cover at most outside of the thickness measurement device (16) is between 0.85 and 1.15-times the correction path length ($l_{ko}$).

7. The thickness measurement device (16) according to one of the preceding claims, **characterised in that** the thickness measurement device (16) is designed in such a way that the first light beam (34) and the second light beam (54) extend coaxially and anti-parallel.

8. A rolling mill for producing a metal foil (14) with

    (a) a rolling device (12) for rolling the metal foil (14) and
    (b) a thickness measurement device (16) according to one of the preceding claims, which is arranged downstream of the rolling device (12) in a direction of material flow (M).

9. The rolling mill according to claim 8, **characterised by**
a processing device (18) that is arranged downstream of the thickness measurement device (16) in the direction of material flow (M).

10. The rolling mill according to claim 9, **characterised in that**
the processing device (18), which is arranged downstream of the thickness measurement device (16) in the direction of material flow (M), is a second rolling device (12).

11. A method for measuring an absolute thickness of flat workpieces, comprising the steps:

    (i) inserting the workpiece (14) into an intermediate space (24) of the thickness measurement device (16) with

        (a) a first arm (20) and a second arm (22) forming the intermediate space (24) between them,
        (b) a first interferometer (26) for

            - emitting a first light beam (34) from the first arm (20) onto the workpiece (14) and

- detecting a first phase ($\Phi_o$) between the first light beam (34) and a return light beam (40) reflected by the workpiece (14),

(c) a second interferometer (48) for

- emitting a second light beam (54) from the second arm (22) onto the workpiece (14) and
- detecting a second phase ($\Phi_o$) between the second light beam (56) and a second return light beam (58) reflected by the workpiece (14) and

(d) a third interferometer (62) for

- forming a third light beam (64) from one arm (20) to another arm (22) away from the workpiece (14), and
- detecting a control phase ($\Phi_{ko}$),

(ii) determining an effective phase ($\Phi_{eff}$) from the first phase ($\Phi_o$), the second phase ($\Phi_u$) and the control phase ($\Phi_{ko}$), and

(iii) determining the absolute thickness ($l_x$) from a measurement phase ($\Phi_{mess}$),

the measurement phase ($\Phi_{mess}$) being a difference from

the effective phase ($\Phi_{eff}$) with the workpiece (14) in the intermediate space (24) and
the effective phase ($\Phi_{eff}$) without the workpiece (14) in the intermediate space (24),

the effective phase ($\Phi_{eff}$) without the workpiece (14) in the intermediate space (24) being an offset phase.

**12.** The method according to claim 11, **characterised by** the steps:

(i) allowing the first light beam (34) and the second light beam (54) to interfere without a workpiece (14) reflecting one of the light beams (34, 54), so that an effective zero phase ($\Phi_{eff,0}$) as an effective phase without the workpiece (14) in the intermediate space is obtained,
(ii) introducing the workpiece (14) in the intermediate space (24), so that the light beams (34, 54) are reflected by the workpiece (14),
(iii) measuring the effective phase with workpiece ($\Phi_{eff,t}$),
(iv) determining the measurement phase ($\Phi_{mess}$) from the measured effective phase with workpiece ($\Phi_{eff,t}$) and the zero phase ($\Phi_{eff,0}$) and
(v) calculating the absolute thickness ($l_x$) from the measurement phase ($\Phi_{mess}$).

## Revendications

**1.** Dispositif de mesure d'épaisseur (16) pour mesurer l'épaisseur absolue de pièces à usiner plates, comprenant

(a) un premier bras (20) et un deuxième bras (22) qui définissent entre eux un espace intermédiaire (24) pour l'introduction de la pièce à usiner,
(b) un premier interféromètre (26) destiné à

- émettre un premier faisceau lumineux (34) à partir du premier bras (20) vers la pièce à usiner (14), et
- détecter une première phase ($\Phi_o$) entre le premier faisceau lumineux (34) et un premier faisceau lumineux de retour (40) réfléchi par la pièce à usiner (14),

(c) un second interféromètre (48) destiné à

- émettre un deuxième faisceau lumineux (54) à partir du deuxième bras (22) vers la pièce à usiner (14), et
- détecter une deuxième phase ($\Phi_u$) entre le deuxième faisceau lumineux (54) et un deuxième faisceau lumineux de retour (58) réfléchi par la pièce à usiner (14),

(d) un troisième interféromètre (62) destiné à

- former un troisième faisceau lumineux (64) d'un bras (20) à l'autre bras (22), à l'écart de la pièce à usiner (14), et
- détecter une phase de contrôle ($\Phi_{ko}$), et

(e) un dispositif d'évaluation pour déterminer l'épaisseur de la pièce à usiner (14) à partir des données interférométriques des interféromètres (26, 48, 62),

**caractérisé en ce que**
(f) le dispositif d'évaluation est conçu pour automatiquement

- déterminer une phase effective ($\Phi_{eff}$) à partir des phases ($\Phi_o$, $\Phi_u$, $O_{ko}$), et
- déterminer l'épaisseur absolue ($I_x$) à partir d'une phase de mesure ($\Phi_{mess}$),
- la phase de mesure ($\Phi_{mess}$) étant une différence entre

la phase effective ($\Phi_{eff}$) avec la pièce à usiner (14) dans l'espace intermédiaire (24) et
la phase effective ($\Phi_{eff}$) sans pièce à usiner (14) dans l'espace intermédiaire (24),

- la phase effective ($\Phi_{eff}$) sans pièce à usiner (14) dans l'espace intermédiaire (24) étant une phase de décalage.

2. Dispositif de mesure d'épaisseur (16) selon la revendication 1, **caractérisé en ce que**

(a) le premier interféromètre (26) et le deuxième interféromètre (48) présentent une source de lumière (28) conçue pour émettre de la lumière d'une première longueur d'onde ($\lambda_1$) et de la lumière d'au moins une deuxième longueur d'onde ($\lambda_2$), et **en ce que**
(b) aux longueurs d'onde ($\lambda_1$, $\lambda_2$) s'applique qu'une première longueur d'onde synthétique ($\Lambda_1 = (\lambda_1 \cdot \lambda_2) / (\lambda_2 - \lambda_1)$) est comprise entre 1 et 50 micromètres.

3. Dispositif de mesure d'épaisseur (16) selon l'une des revendications précédentes, **caractérisé en ce que** la source de lumière (28) est conçue pour émettre de la lumière d'une troisième longueur d'onde ($\lambda_3$) choisie de telle sorte qu'une deuxième longueur d'onde synthétique ($\Lambda_2 = (\lambda_1 \cdot \lambda_3) / (\lambda_3 - \lambda_1)$) soit supérieure à la première longueur d'onde synthétique ($\Lambda_1$) et soit au plus égale à 200 micromètres.

4. Dispositif de mesure d'épaisseur (16) selon l'une des revendications précédentes, **caractérisé par**

(a) une jauge d'épaisseur absolue pour déterminer une valeur de mesure d'épaisseur grossière de l'épaisseur absolue de la pièce à usiner (14),
(b) le dispositif d'évaluation étant conçu pour déterminer automatiquement l'épaisseur de la pièce à usiner (14) à partir de la valeur de mesure d'épaisseur grossière et de la phase effective ($\Phi_{eff}$).

5. Dispositif de mesure d'épaisseur (16) selon l'une des revendications précédentes, **caractérisé par** une isolation thermique des bras (20, 22) et d'une traverse (23) reliant les bras.

6. Dispositif de mesure d'épaisseur (16) selon l'une des revendications précédentes, **caractérisé en ce que**

(a) le troisième faisceau lumineux (64) parcourt une longueur de trajet de correction ($I_{ko}$) à l'extérieur du dispositif de mesure d'épaisseur (16), et
(b) un premier trajet libre ($I_{mess,1}$) que le premier faisceau lumineux (34) peut parcourir au maximum à l'extérieur du dispositif de mesure d'épaisseur (16) est compris entre 0,85 et 1,15 fois la longueur de trajet de correction ($I_{ko}$), et/ou
(c) un deuxième trajet libre ($I_{mess,2}$) que le deuxième faisceau lumineux (54) peut parcourir au maximum à l'extérieur du dispositif de mesure d'épaisseur (16) est compris entre 0,85 et 1,15 fois la longueur de trajet de correction ($I_{ko}$).

7. Dispositif de mesure d'épaisseur (16) selon l'une des revendications précédentes, **caractérisé en ce que** le premier faisceau lumineux (34) et le deuxième faisceau lumineux (54) s'étendent coaxialement et antiparallèlement (l'un vers l'autre).

8. Laminoir (10) pour la fabrication d'une feuille métallique (14), comprenant

(a) un dispositif de laminage (12) pour laminer la feuille métallique (14), et
(b) un dispositif de mesure d'épaisseur (16) selon l'une des revendications précédentes, qui est disposé en aval du dispositif de laminage (12) dans une direction de flux de matière (M).

9. Laminoir selon la revendication 8, **caractérisé par** un dispositif d'usinage (18) qui est disposé en aval du dispositif de mesure d'épaisseur (16) dans la direction de flux de matière (M).

10. Laminoir selon la revendication 9, **caractérisé en ce que** le dispositif d'usinage (18) disposé en aval du dispositif de mesure d'épaisseur (16) dans la direction de flux de matériau (M) est un deuxième dispositif de laminage (12).

11. Procédé de mesure d'une épaisseur absolue de pièces à usiner plates, comprenant les étapes consistant à :

(i) introduire la pièce à usiner (14) dans un espace intermédiaire (24) d'un dispositif de mesure d'épaisseur (16), comprenant

(a) un premier bras (20) et un deuxième bras (22) qui définissent entre eux l'espace intermédiaire (24),
(b) un premier interféromètre (26) destiné à

- émettre un premier faisceau lumineux (34) vers la pièce à usiner (14), et
- détecter une première phase ($\Phi_o$) entre le premier faisceau lumineux (34) et un premier faisceau de lumière de retour (40) réfléchi par la pièce à usiner (14),

(c) un deuxième interféromètre (48) destiné à

- émettre un deuxième faisceau lumineux (54) vers la pièce à usiner (14), et
- détecter une deuxième phase ($\Phi_u$) entre le deuxième faisceau lumineux (56) et un deuxième faisceau lumineux de retour (58) réfléchi par la pièce à usiner (14), et

(d) un troisième interféromètre (62) destiné à

- former un troisième faisceau lumineux (64) d'un bras (20) à l'autre bras (22), à l'écart de la pièce à usiner (14), et
- détecter une phase de contrôle ($\Phi_{ko}$),

(ii) déterminer une phase effective ($\Phi_{eff}$) à partir des phases ($\Phi_o$, $\Phi_u$, $\Phi_{ko}$), et
(iii) déterminer l'épaisseur absolue ($I_x$) à partir de la phase effective ($\Phi_{eff}$), la phase de mesure ($\Phi_{mess}$) étant une différence entre

la phase effective ($\Phi_{eff}$) avec la pièce à usiner (14) dans l'espace intermédiaire (24) et
la phase effective ($\Phi_{eff}$) sans pièce à usiner (14) dans l'espace intermédiaire (24),

la phase effective ($\Phi_{eff}$) sans pièce à usiner (14) dans l'espace intermédiaire (24) étant une phase de décalage qui correspond à la phase effective à un instant zéro t = 0.

12. Procédé selon la revendication 11, **caractérisé par** les étapes consistant à :

(i) faire interférer le premier faisceau lumineux (34) et le deuxième faisceau lumineux (54) sans qu'une pièce à usiner (14) ne réfléchisse l'un des faisceaux lumineux (34, 54), de manière à obtenir une phase effective nulle ($\Phi_{eff,0}$),
(ii) introduire la pièce à usiner (14) dans l'espace intermédiaire (24) de sorte que les faisceaux lumineux (34, 54) soient réfléchis par la pièce à usiner (14),
(iii) mesurer la phase effective avec la pièce à usiner ($\Phi_{eff,t}$),
(iv) déterminer la phase de mesure ($\Phi_{mess}$) à partir de la phase effective mesurée avec la pièce à usiner ($\Phi_{eff,t}$) et de la phase nulle ($\Phi_{eff,0}$), et
(v) calculer l'épaisseur absolue ($I_x$) à partir de la phase de mesure ($\Phi_{mess}$).

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013017289 B4
- DE 4436922 A1
- JP 2001033215 A
- JP 3293666 B
- DE 10060144 A1
- DE 102007022580 A1
- DE 2016100745 B3
- DE 112010000705 T5
- JP H04364410 A

**In der Beschreibung aufgeführte Nicht-Patentliteratur**

- **MEINERS-HAGEN et al.** Profilometry with a multi-Wavelength diode laser interferometer. *Meas. Sci. Technol.,* 2004, vol. 15, 741-746
- **MEINERS-HAGEN et al.** *Meas. Sci. Techn.,* 2004, vol. 15, 741